# EUROPÄISCHE PATENTSCHRIFT

(11) **EP 0 439 758 B1**
(45) Veröffentlichungstag und Bekanntmachung des Hinweises auf die Patenterteilung: **05.03.1997**
(21) Anmeldenummer: 90124164.6
(22) Anmeldetag: 14.12.1990
(51) Int. Cl.: H04N 7/18

(54) **Gesteuerte Entzerrerverstärker in Video-Überwachungsanlagen**
Controlled equalizing amplification in video monitoring devices
Amplificateur égalisateur commandé dans un dispositif vidéo-surveillance

(30) Priorität: 02.02.1990 DE 4003050
(43) Veröffentlichungstag der Anmeldung: 07.08.1991
(73) Patentinhaber: Grundig E.M.V. Elektro-Mechanische Versuchsanstalt Max Grundig GmbH & Co. KG, 90762 Fürth (DE)
(72) Erfinder: Rumland, Rainer, GRUNDIG E.M.V., W-8510 Fuerth (DE)

(56) Entgegenhaltungen:
- EP-A- 0 157 460
- US-A- 4 814 869
- TELCOM REPORT. Bd. 9, Nr. 2, März 1986, MUNCHEN DE Seiten 132 - 135; F. WEISS: 'FERNSEHÜBERTRAGUNG AUS DEM FAHRENDEN ZUG BEI EUROPAS ERSTER LUFTKISSEN-U-BAHN'

## Beschreibung

Die Erfindung betrifft eine Videozentrale zum Auswählen und Entzerren einer Anzahl von Videosignalen, wobei an einer Videomatrix eine Vielzahl von Videosignaleingängen vorgesehen sind, aus der eine kleine Anzahl von Videosignalen ausgewählt und weitergeleitet wird.

In der Sicherheits- und Überwachungstechnik rücken Videoüberwachungssysteme immer mehr in den Vordergrund. Ihr Einsatzbereich ist breit gestreut. Es werden Privathäuser und Firmengelände ebenso mit Videokameras überwacht wie öffentliche Bereiche, z.B. U-Bahn, Flughäfen und Verkehr. Bei großen Überwachungsanlagen steht oft eine sehr große Anzahl von Videokameras einer kleinen Anzahl von Überwachungsmonitoren gegenüber. So wird z.B. der S-Bahnbereich in Hamburg von 600 Kameras überwacht, deren Bilder zu verschiedenen Zentralen übertragen werden, die jeweils drei Monitore zur Beobachtung beinhalten. Mit der Videokreuzschiene VKM 83 der Anmelderin lassen sich Koppelfelder mit bis zu 248 Eingängen und 124 Ausgängen realisieren.

Aus der US-Patentschrift US-A-4,814,869 ist ein Videoüberwachungssystem bekannt, bei dem eine Vielzahl von Kameras verwendet wird. Jeder diese Kameras ist ein Modulator zugeordnet, der das Videosignal auf eine der Kamera zugeordnete Trägerfrequenz moduliert. Über eine oder mehrere Übertragungsleitungen werden die Signale an eine Zentrale übertragen. Die Zentrale enthält mehrere Anzeigegeräte, denen jeweils ein Tuner zur Abstimmung auf eine Trägerfrequenz und zur Demodulation vorgeschaltet ist. Die den Kameras zugeordeten Abstimmdaten werden in einem Speicher eines Computers abgelegt.

Auf der Übertragungsstrecke von den Videosignalquellen zur Videozentrale entstehen Verzerrungen auf Grund der nichtlinear frequenzabhängigen Dämpfung des Kabels oder der Leitung, die für jeden Signaleingang unterschiedliche Werte haben können. Hauptsächlich spielt die Länge und die Art der verwendeten Übertragungsleitung eine Rolle.

Um die Wirkung der Verzerrungen am Empfangsort möglichst gering zu halten, ist es nötig, die Signale zu entzerren.

Zu diesem Zweck werden in bekannten Überwachungsanlagen Entzerrerverstärker eingesetzt. Diese Entzerrerverstärker beinhalten RC-Glieder und Verstärkungselemente. Da die Verzerrungen und die Dämpfung, die auf dem Übertragungsweg entstehen bei jedem Übertragungskanal verschieden sind, werden in bekannten Überwachungsanlagen vor der Videomatrix, in der die Auswahl einzelner Signalquellen aus den gesamten Signalquellen ausgeführt wird, für jeden Eingang ein Entzerrerverstärker angebracht, der für die jeweilige Übertragungsstrecke dimensioniert wird.

Aufgabe der Erfindung ist es, die Anzahl der benötigten Entzerrerverstärker auf eine minimale Anzahl zu reduzieren.

Diese Aufgabe wird gelöst, indem die Entzerrerverstärker variabel einstellbar ausgeführt sind und nach der Videomatrix angeordnet sind. Da in der Regel an einer Videomatrix eine große Zahl von Signaleingängen einer wesentlich kleineren Zahl von Signalausgängen gegenübersteht, genügt es für die Anzahl der Ausgänge Entzerrerverstärker vorzusehen. Bei der ausgangsseitigen Anordnung ist es notwendig, die Entzerrerverstärker steuerbar zu gestalten, so daß die Entzerrerwerte an die durchgeschalteten Signaleingänge angepaßt werden können. Hierzu werden beim Einrichten der Überwachungsanlage die für die einzelnen Videoquellen erforderlichen Entzerrerwerte eingelernt und abgespeichert. Beim Durchschalten einer Videoquelle wird der entsprechende Entzerrerwert aus dem Speicher abgerufe, und der Entzerrer wird damit eingestellt.

Bei einer erfindungsgemäßen Anordnung kann sich die Zahl der benötigten Entzerrerverstärker erheblich reduzieren. Weiterhin braucht bei einem Wechsel von Signalquellen oder von Übertragungsleitungen nicht ein neuer Entzerrervertärker mit passender Dimensionierung eingefügt werden, sondern es reicht die Bestimmung der Entzerrerwerte, die dann in einem Speicher abgelegt und bei Bedarf aufgerufen werden.

Im folgenden wird die Erfindung an Hand des Blockschaltbildes nach der einzigen Figur erläutert.

Dieses Blockschaltbild zeigt eine Videozentrale gemäß der Erfindung. Sie enthält die Videomatrix 1, die mit 128 Eingängen E 1 bis E 128, an denen jeweils eine Überwachungskamera 0 angeschlossen ist, belegt ist. Die 8 Ausgänge A1 bis A8 der Videomatrix 1 führen an 8 gesteuerte Entzerrer 2. Diese Entzerrer 2 sind mit Monitoren 6 verbunden und weiterhin über Datenleitungen mit dem Mikrocomputer 3. Dieser ist verbunden mit dem Speicher 4, der Bedieneinheit 5 und der Videomatrix 1.

Mit der Bedieneinheit 5 werden die Eingabebefehle vom Bedienpersonal an den Mikrocomputer 3 gegeben. Dieser steuert, in Abhängigkeit von den Eingabebefehlen den Ablauf bei der Auswahl der Videoquellen. Die Videoquellen können manuell, d.h. über die Bedieneinheit durchgeschaltet werden oder sie können durch ein vorgebbares Ablaufprogramm zyklisch weitergeschaltet werden. Im Alarmfall können automatisch die Kameras, welche eine Einrichtung, bei der Alarm ausgelöst wurde, überwachen, an einen Monitor durchgeschaltet werden. Beim Durchschalten einer Videoquelle an einen Monitor werden zunächst die für den ausgewählten Eingang abgespeicherten Entzerrerwerte aus dem Speicher 4 gelesen und im Mikrocomputer 3 aufbereitet. Vom Mikrocomputer 3 werden die aufbereiteten Entzerrerwerte an den gesteuerten Entzerrer, der mit dem ausgewählten Ausgang der Videomatrix 1 verbunden ist, gegeben. In der Regel beinhalten Entzerrerverstärker steuerbare RC-Glieder, deren Eigenschaften von einem Kapazitätswert abhängig sind.

Die Filtereigenschaften können also mit Varicaps, das sind Dioden die in Sperrichtung betrieben werden und deren Kapazität von der angelegten Sperrspannung abhängig ist, durch Anlegen einer Steuerspannung verändert werden.

Ebenso lassen sich Verstärkungsfaktoren bei Verstärkern, in Verbindung mit steuerbaren Widerständen, durch Steuerspannungen verändern. Die im Mikrocomputer 3 aufbereiteten, und im Speicher abgelegten Entzerrerwerte können also nach D/A-Wandlung als Steuerspannungen an die Entzerrerverstärker gegeben werden.

Die im Speicher 4 abgelegten Entzerrerwerte werden bei der Inbetriebnahme der Videozentrale bestimmt. Dabei werden allen Eingängen der Videomatrix 1 die für die Entzerrung notwendigen Entzerrerwerte durch manuellen Abgleich zugeordnet. Im Speicher 4 werden dann jeweils die ermittelten Entzerrerwerte nach A/D-Wandlung mit der zugehörigen Eingangsnummer E 1 bis E 128 abgespeichert.

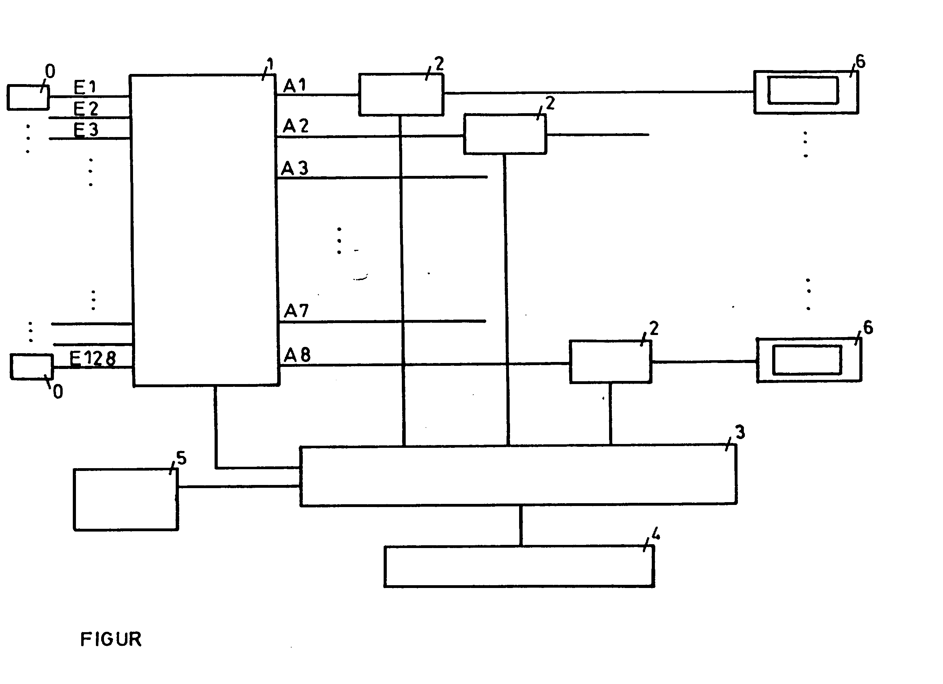

Bei einer Videozentrale nach Figur 1 mit 128 Videoeingängen und 8 Ausgängen können im Höchstfall 120 Entzerrer eingespart werden. Selbst mit der Einschränkung, daß einige kurze Übertragungsstrecken keine nennenswerten Verzerrungen mit sich bringen, bleibt die Einsparung von Entzerrerverstärkern erheblich.

## Patentansprüche

1. Videoüberwachungszentrale mit einem Mikrocomputer zum Auswählen und Entzerren einer Anzahl von Videosignalen aus einer größeren Anzahl von Videosignalen durch eine Videomatrix, **dadurch gekennzeichnet**, daß
- die Entzerrerverstärker nach der Videomatrix angeordnet sind,
- der Mikrocomputer so ausgelegt ist, daß für jeden Videosignaleingang die Entzerrerwerte einmalig ermittelt und in einem Speicher abgelegt werden,
und daß
beim Durchschalten eines Videosignals die zugehörigen Entzerrerwerte aus dem Speicher abgerufen und auf den Entzerrer angewendet werden.

2. Videozentrale nach Anspruch 1, **dadurch gekennzeichnet**, daß die ermittelten Entzerrerwerte für alle Entzerrerverstärker eine Systems austauschbar sind.

3. Videozentrale nach Anspruch 1 oder 2, **dadurch gekennzeichnet**, daß die Entzerrerverstärker durch Steuerspannungen, die über den Mikrocomputer in Abhängigkeit der abgespeicherten Entzerrerwerte von einem D/A-Wandler erzeugt werden, abgestimmt werden.

## Claims

1. Video monitoring station with a microcomputer for selecting and equalizing a number of video signals from a larger number of video signals by means of a video matrix, **characterised in that**
- the equalizing amplifiers are arranged downstream of the video matrix,
- the microcomputer is designed so that the equalization values are calculated once only for each video signal input and are stored in a memory,
and that
when a video signal is switched through, the associated equalization values are retrieved from the memory and used in the equalizer.

2. Video monitoring station according to Claim 1, **characterised in that** the calculated equalization values are interchangeable for all equalization amplifiers of a system.

3. Video monitoring station according to Claim 1 or 2, **characterised in that** the equalization amplifiers are adjusted by means of control voltages which are generated via the microcomputer in relation to the stored equalization values from a D/A converter.

## Revendications

1. Central de contrôle vidéo comportant un micro-ordinateur pour la sélection et l'égalisation d'un nombre de signaux vidéo parmi un nombre plus important de signaux vidéo par une matrice vidéo, caractérisé en ce que
- les amplificateurs égaliseurs sont disposés en aval de la matrice vidéo,
- le micro-ordinateur est agencé de telle sorte que pour chaque entrée du signal vidéo, les valeurs de l'égaliseur sont déterminées une seule fois et sont mémorisées dans une mémoire, et
que lors du transfert d'un signal vidéo, les valeurs associées de l'égaliseur sont appelées dans la mémoire et sont appliquées à l'égaliseur.

2. Central vidéo selon la revendication 1, caractérisé en ce que les valeurs déterminées de l'égaliseur peuvent être échangées pour tous les amplificateurs égaliseurs d'un système.

3. Central vidéo selon la revendication 1 ou 2, caractérisé en ce que les amplificateurs égaliseurs sont accordés au moyen de tensions de commande, qui sont produites par un convertisseur numérique/analogique par l'intermédiaire du micro-ordinateur en fonction des valeurs mémorisées de l'égaliseur.
